# EUROPÄISCHE PATENTANMELDUNG

(11) **EP 3 404 441 A1**
(43) Veröffentlichungstag der Anmeldung: **21.11.2018**
(21) Anmeldenummer: 18173068.0
(22) Anmeldetag: 18.05.2018
(51) Int. Cl.: G01S 7/497

(54) **SIMULATIONSVORRICHTUNG FÜR EIN LIDAR-LICHTMESSSYSTEM**

(30) Priorität: 18.05.2017 DE 102017110790
(71) Anmelder: KONRAD GmbH, DE-78315 Radolfzell (DE)
(72) Erfinder: KONRAD, Michael, 78315 Radolfzell (DE)
(74) Vertreter: Patentanwälte und Rechtsanwalt Weiß, Arat & Partner mbB

(57) **Zusammenfassung**

Die Erfindung betrifft eine Simulationsvorrichtung für ein LiDAR - Lichtmesssystem mit einem LiDAR - Lichtempfangssensor (1), wobei in der Ebene des LiDAR - Lichtempfangssensor (2) ein Lichtsender (12) vorhanden ist.

## Beschreibung

### Technisches Gebiet

Die Erfindung betrifft ein Simulationsvorrichtung nach dem Oberbegriff des Anspruchs 1 und ein Verfahren nach Anspruch 9.

### Stand der Technik

LiDAR (Abkürzug für Light detection and ranging) Lichtmesssysteme werden neben weiteren Anwendungen zur optischen Abstands- und Geschwindigkeitsmessung eingesetzt. LiDAR Lichtmesssysteme senden Licht aus und messen die Laufzeit, in der das Licht nach der Reflexion an einem Objekt wieder zum LiDAR Lichtmesssystem zurückkommt. Aus der bekannten Geschwindigkeit des Lichts folgt die Entfernung des Objekts vom LiDAR Lichtmesssystem. Je nach Auslegung eines LiDAR Lichtmesssystems sind Entfernungsmessungen im Bereich von wenigen Zentimetern bis zu mehreren Hunderttausend Kilometern möglich.

Wichtige Anwendungsbereiche für LiDAR Lichtmesssysteme besitzen einen Messbereich für den Abstand von etwa 1 m bis zu wenigen 100 m. Beispiele dieser Anwendungsbereiche sind mobile Instrumente zur optischen Entfernungsmessung und LiDAR Lichtmesssysteme für das Anwendungsfeld Automotive, nämlich Fahrerassistenzsysteme und autonomes Fahren.

Für den Test von LiDAR Lichtmesssystemen, beispielsweise in der industriellen Qualitätskontrolle, wird eine Methode benötigt, Messungen bei definierten Entfernungen durchzuführen. Dazu werden im einfachsten Fall Messstrecken dieser definierten Längen benötigt. Für Qualitätskontrollen werden ebenfalls definierte Umgebungsbedingungen bezüglich Umwelt, wie Temperatur, Feuchte und Fremdlicht entlang der Messstrecke sowie definierte optische Eigenschaften des Messobjekts benötigt. Die Einhaltung der Umgebungsbedingungen stellt einen erheblichen Anspruch an den Platzbedarf für Messstrecken. Teststrecken für Entfernungen über etwa 10 m Länge sind deshalb aufwändig zu realisieren.

Ist das LiDAR Lichtmesssysteme mit mehreren Kanälen ausgestattet, die, analog einer herkömmlichen Kamera, ein Bild mit einem Öffnungswinkel aufnehmen, so erhöht sich der Platzbedarf im Vergleich zum linearen Entfernungsmesssystem. Für einen LiDAR - Lichtempfangssensor mit einem horizontalen Öffnungswinkel von 360°, einem vertikalen Öffnungswinkel von 45° und einer maximalen Messdistanz von 100 m wird ein Messplatz von 200 m Durchmesser und einer Höhe von 83 m benötigt.

Neben dem einfachen Test von LiDAR Lichtmesssystemen bei festen Entfernungen besteht der Anspruch an ein Testsystem darin, eine bewegte Szenerie bereitzustellen. Dies ist insbesondere notwendig, um in der Applikationsentwicklung LiDAR Sensoren zu testen. Um beispielsweise das Verhalten von LiDAR Lichtmesssystemen in der Anwendung autonomes Fahren zu testen, müssen Fahrten durchgeführt werden wobei Sensordaten aufgenommen werden. Dann kann aber nur diese Szenerie der durchgeführten Fahrt getestet werden. Änderungen, die beispielsweise in der Entwicklung der Applikation notwendig sind, bedingen eine neue Messfahrt.

### Aufgabe der Erfindung

Die Aufgabe der vorliegenden Erfindung ist es, die Nachteile aus dem Stand der Technik zu überwinden. Insbesondere soll eine Simulationsvorrichtung bereitgestellt werden, die kostengünstig die Funktions- und Qualitätskontrolle ermöglicht und dabei zu einer Zeitersparnis führen soll.

### Lösung der Aufgabe

Zur Lösung der Aufgabe führen die Merkmale nach dem Anspruch 1 und 9.

Vorteilhafte Ausgestaltungen sind in den Unteransprüchen beschrieben.

Die Erfindung erlaubt es, dem LiDAR Lichtmesssystem jede beliebige bewegte Szenerie zu präsentieren. Anstelle des bei einer Messstrecke vom Messobjekt zum Sensor zurückkommende zeitverzögerte Lichtsignals wird das zeitverzögerte Lichtsignal über eine einstellbare Verzögerungsstrecke generiert.

Das vom LiDAR Lichtmesssystem ausgesandte Lichtsignal wird mit einem Photodetektor detektiert und die weitere Ausbreitung beispielsweise durch eine Lichtfalle abgeblockt. Der Zeitpunkt der Detektion des von LiDAR Lichtmesssystem ausgehenden Lichtsignals wird als Triggerzeitpunkt für die Erzeugung des zeitverzögerten Signals verwendet.

Ein mit Bezug zum Trigger zeitverzögertes Signal wird generiert. In der Erfindung kann die Zeitverzögerung ausgehend von einer durch die Elektronik bedingten Minimalverzögerung beliebig eingestellt und verändert werden. Die Erzeugung des zeitverzögerten Signals geschieht mittels einer elektronischen Zeitverzögerungseinheit. Die Änderung der Zeitverzögerung erfolgt ebenfalls elektronisch und ist vorzugsweise in einem Bereich von >10 s-1. Das zeitverzögerte Signal wird zur Erzeugung eines Lichtsignals mittels eines geeigneten schnellen Verstärkers verwendet.

Das so erzeugte Lichtsignal wird auf das LiDAR Lichtmesssystem geleitet und von diesem als Objekt in der Entfernung entsprechend der Verzögerungszeit interpretiert.

Für jeden Kanal des LiDAR Lichtmesssystems gibt es eine solche von den anderen Kanälen unabhängige Signalkette. Dadurch ist es möglich für das LiDAR System eine simulierte bewegte Umgebung zu generieren.
- Erzeugung von veränderbaren zeitverzögerten Signalen die einer bewegten 1 bis 3 dimensionalen Szene entsprechen, welche zur Laufzeit synchron an die Szenerie angepasst werden.
- Skalierbarkeit in der Kanal Anzahl von einem Kanal bis zur Auflösung des verwendeten Optischen System zur Entfernungsmessung
- Skalierbarkeit in Entfernung ausgehend von einem Mindestabstand der begrenzt ist durch die Reaktionsgeschwindigkeit der verwendeten elektronischen Komponenten zur Detektion von Lichtimpulsen über die Zeitverzögerungsglieder bis zur Lichterzeugung bis hin zum maximalen Erfassungsbereiches des optischen Systems.
- Insbesondere für den Einsatz im zeitsynchronen Verbund von mehreren unterschiedlichen Sensor Simulatoren zur Visualisierung von virtuellen Realitäten.
- Insbesondere für den Bereich von ADAS (Advanced driver assistance systems)
- Einstellbarkeit einer statischen Zeitverzögerung welcher einer statischen Entfernung entspricht.

Die erfindungsgemäße Simulationsvorrichtung ist für ein LiDAR - Lichtmesssystem vorgesehen. Dabei wird besonderes Augenmerk auf einen LiDAR Lichtempfangssensor gelegt. Im Rahmen der Funktion-und Qualitätskontrolle solcher LiDAR - Lichtempfangssensoren sind regelmässig größere auch szenische Aufbauten notwendig, welche einer zügigen Kontrolle entgegenstehen. In diesen Aufbauten werden Personen und Sachen in unterschiedlichen Entfernungen zu dem LiDAR - Lichtempfangssensor aufgebaut. Anschließend wird ein LiDAR-Lichtsender aktiviert, um aus der Zeit, die die Reflexion der Personen und Gegenstände zurück zum LiDAR - Lichtempfangssensor die Entfernung herzuleiten. In der erfindungsgemäßen Lösung tritt der LiDAR - Lichtsender nun zurück. Vielmehr wird der Aufbau durch einen Lichtsender ersetzt. Dabei wird der Lichtsender derart eingesetzt, dass er wie die Reflexion des LiDAR - Lichtsenders vom Lichtempfangssensor wahrgenommen wird. Dabei ist der Lichtempfangssensor statisch befestigt. Der Lichtsender ist in der gleichen Ebene gehaltert. Das bedeutet, dass der Lichtsender in einer Höhe zu einem Untergrund angebracht ist, dass das ausgesandte Lichtsignal direkt und im Wesentlichen parallel zu einem Untergrund verläuft.

Außerdem ist ein weiterer Lichtsender neben dem Lichtsender in der Ebene des Lichtempfangssensors angeordnet. Das wiederum bedeutet, dass der Lichtempfangssensor aus unterschiedlichen Richtungen mit dem Lichtsignal des Lichtsenders oder einem weiteren Signal des weiteren Lichtsenders aktivierbar ist. Wenn nun die Zeitdauer zwischen der Aktivierung des Lichtempfangssensors und des ersten Lichtsenders kürzer andauert, als die Aktivierung des Lichtempfangssensors und der Registrierung des weiteren Lichtsignals des weiteren Lichtsenders, der Lichtempfangssensor den Eindruck hat, dass der Lichtsender näher steht, als der weitere Lichtsender. In der Realität stehen beide Lichtsender nebeneinander in gleichem Abstand zu dem Lichtempfangssensor.

In einem bevorzugten Ausführungsbeispiel ist der Lichtsender und der weitere Lichtsender je ein Glasfaserkopf ist. Der Einsatz von Glasfaserleitungen birgt den Vorteil, dass es nicht zu ungewollten Verzögerungen beim Freigeben des Lichtsignals bis hin zum Erzeugen des Lichtsignals kommt und somit der Lichtempfangssensor ein realistisches Abbild der tatsächlichen Zeitdimensionen erhält.

Weiter ist ein Rechner vorhanden, welcher den Lichtempfangssensor steuert. Der Rechner bestimmt das Einschalten des Lichtempfangssensors und koordiniert außerdem die Ansteuerung des Lichtsenders und des weiteren Lichtsenders und somit auch die Zeitspanne zwischen dem Einschalten des Lichtempfangssensors und der beiden Lichtsender. Dabei registriert der Rechner auch, ob der Lichtempfangssensor richtig arbeitet und die verschiedenen Zeitspannen in entsprechende räumliche Entfernungen aufteilt.

Der Rechner dient dabei also dazu, dass die Freischaltung des Lichtempfangssensors und die Zeitspanne zur Abgabe eines Lichtsignals über den Lichtsender oder den weiteren Lichtsender überwacht und gesteuert wird, wobei der Signaleingang des Lichtsignals von dem Lichtsender oder dem weiteren Lichtsender ebenfalls registriert wird.

In einem anderen bevorzugten Ausführungsbeispiel wird ein LiDAR-Lichtsignal eines LiDAR-Lichtgebers durch einen Verstärker, einen Komperator, ein Verzögerungsglied und einen LED-Treiber oder Laserdiode-Treiber eine LED oder Laserdiode in dem Lichtsender und/oder weiterem Lichtsender aktiviert.

Dadurch bedarf es keiner separaten Lichtquellen mehr. Vielmehr kann das LiDAR-Lichtsignal je nach Bedarf und auch gewollter Zeitspanne zwischen Absenden und Empfangen in den Lichtsender oder den weiteren Lichtsender weitergeleitet werden. Dabei fällt beispielsweise dem Verzögerungsglied die Aufgabe zu, dass das abgesandte LiDAR- Lichtsignal erst nach einer definierten Zeit weitergegeben wird, um es an den Lichtempfangssensor wieder zurückzuleiten.

Weiter ist der Lichtsender und der weitere Lichtsender statisch in einer Halterung in einem Umfang von bis zu 360°, zentrisch ausgerichtet zu dem Lichtempfangssensor, angebracht sind. Neben dem Lichtsender und dem weiteren Lichtsender können eine unbestimmte Anzahl von anderen Lichtsendern in gleicher Ebene nebeneinander angeordnet sein. Auf diese Weise kann ein möglichst vollständiges Abbild des zu detektieren Umfelds erreicht werden. Die Halterung der einzelnen Lichtsender ist derart gestaltet, dass sie alle im wesentlichen auf gleicher Ebene, also gleicher Höhe zu einem gemeinsamen Untergrund angeordnet sind und vom Lichtempfangssensor detektierbar sind.

Weiter wird ein Verfahren zur Simulation einer Detektionsumgebung für einen Lichtempfangssensor mit einem Lichtsender und einem weiteren Lichtsender, der neben dem Lichtsender in gleicher Ebene wie der Lichtsender angebracht ist, beansprucht wobei folgende Verfahrensschritte durchgeführt werden:
- der Lichtempfangssensor wird aktiviert
- der Lichtsender gibt ein Lichtsignal nach einer definierten Zeit ab
- der Lichtempfangssensor registriert das Lichtsignal.

Weiter ist nach einer weiteren Aktivierung des Lichtempfangssensors sendet der weitere Lichtsender ein weiteres Lichtsignal, wobei der Lichtempfangssensor das weitere Lichtsignal registriert.

Das Lichtsignal und das weitere Lichtsignal können durchaus Zeit synchron ausgesandt werden. Das würde vom Lichtempfangssensor beispielsweise wie zwei in gleicher Entfernung stehende Gegenstände wahrgenommen werden können.

Zuletzt kann ein vorhandenes LiDAR-Lichtsignal eines LiDAR-Lichtgebers durch einen Verstärker, einen Komperator und ein Verzögerungsglied in einen LED- Treiber oder Laserdiode-Treiber geleitet werden, wobei der LED-Treiber anschliessend eine LED in einem optischen System aktiviert und der Laserdiode-Treiber ein Laserdiode in dem optischen System aktiviert. Als optisches System kommen durchaus auch die oben erwähnten Glasfaserkabel in Betracht. Der Unterschied dieser Anordnung liegt schlicht darin, dass in der vorher beschriebenen Alternative unabhängig von dem LiDAR- Lichtsignal irgendein anders erzeugtes Lichtsignal oder weiteres Lichtsignal genutzt wird. In diesem Ausführungsbeispiel wird das sowieso in diesen LiDAR-Systemen vorhandene LiDAR- Lichtsignal genutzt bzw. umgeleitet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Schaltdarstellung;
- Figur 2: eine perspektivische Ansicht einer erfindungsgemässen Simulationsvorrichtung.

### Ausführungsbeispiel

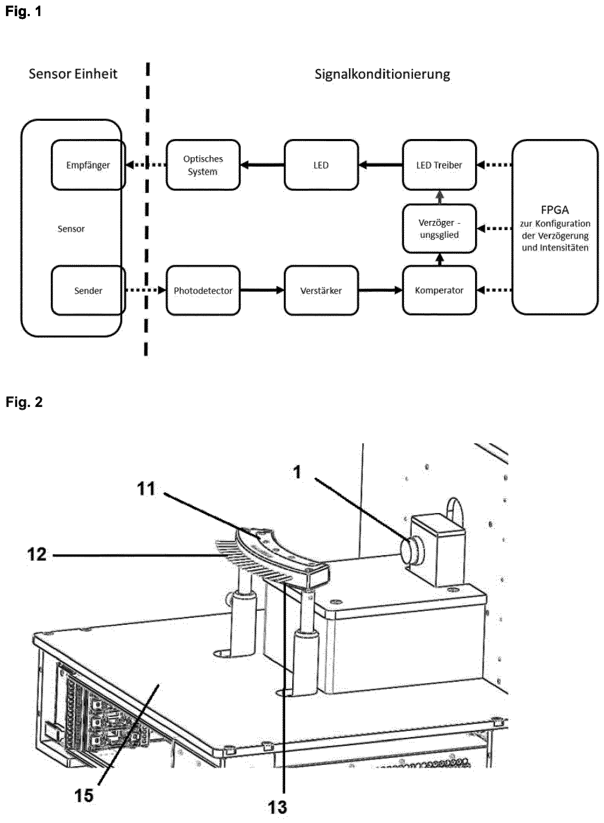

In Figur 1 ist eine schematische Schaltdarstellung für das Ausführungsbeispiel gezeigt, dass nicht nur ein LiDAR - Lichtempfangssensor 1 eines LiDAR - Lichmesssystems 14 genutzt wird, sondern auch ein LiDAR - Lichtsignalgeber 2.

In einem solchen Fall wird das ausgesandte LiDAR - Lichtsignal des LiDAR - Lichtsignalgebers 2 zunächst in einen Photodetector 3 geleitet. Als Photodetector, auch Lichtsensor oder optischer Detektor, optoelektronischer Sensor, werden elektronische Bauelemente bezeichnet, die Licht unter Benutzung des photoelektrischen Effekts in ein elektrisches Signal umwandeln oder einen von der einfallenden Strahlung abhängigen elektrischen Widerstand zeigen. Mit dem Begriff werden aber auch Applikationen benannt, die ein solches strahlungsmessendes Bauteil integriert haben.

Das vom Photodetector 3 aufgenommene Signal wird anschliessend in einen Verstärker 4 weitergeleitet, welcher das Signal aufwertet und für die weitere Verarbeitung verstärkt.

Danach wird das Signal in einen Komperator 5 weitergegeben. Dabei überwacht ein Rechner 6 den Komperator 5 und die Weitergabe des Signals an ein Verzögerungsglied 7, welches die Weitergabe des Signals an einen LED-Treiber 8 in definierter Form und beeinflusst vom Rechner 6 mit unterschiedlicher zeitlicher Verzögerung weitergibt.

Der LED-Treiber 8 wiederum bringt eine LED 9 zur Abgabe des Signals in einem optischen System 10 zum Leuchten. Nachdem das Signal durch die LED im optischen System 10 in ein Lichtsignal umgewandelt wurde, empfängt der LiDAR - Lichtempfangssensor 1 das Lichtsignal des optischen Systems 10.

In Figur 2 ist weiter eine Simulationsvorrichtung gezeigt, welche auf einem gemeinsamen Untergrund 15 angeordnet ist. Dabei ist der LiDAR - Lichtempfangssensor 1 in einem bestimmten Abstand zu dem Untergrund 15 angeordnet. Ausserdem ist eine Halterung 11 gezeigt, welche zur Aufnahme des Lichtsender 12 oder des weiteren Lichtsenders 13 dient. Daneben kann eine Vielzahl von anderen Lichtsendern angebracht werden, die zwar in der Figur 2 gezeigt, aber nicht weiter benannt sind.

In einem anderen Ausführungsbeispiel kann die Halterung 11 auch um 90° gekippt ausgeführt sein, wenn der Lichtempfangssensor 1 nicht nur horizontale Lichtsignale, sondern auch vertikale Lichtsignale empfangen soll. Es kann auch eine Kombination aus dem horizontalen optischen System 10 und einem weiteren vertikalen optischen System in Frage kommen. Die horizontale und/oder vertikale Anordnung ist hierbei als in der Ebene des Lichtempfangssensors 1 zu verstehen.

Der Lichtsender 12 und der weitere Lichtsender 13 werden durch die Halterung in der gleichen Ebene gehalten. Das bedeutet in diesem Ausführungsbeispiel in einem gleichen Abstand zu dem Untergrund 15. Sie sind nebeneinander angeordnet. Das wiederum bedeutet, dass der Lichtsender 12 und der weitere Lichtsender 13 hier in einer Teilkreisform mit zentrischer Ausrichtung zum LiDAR - Lichtempfangssensor 1 angeordnet sind.

Obwohl nur eine/einige bevorzugte Ausführungsbeispiel/e der Erfindung beschrieben und dargestellt wurde, ist es offensichtlich, dass der Fachmann zahlreiche Modifikationen hinzufügen kann, ohne Wesen und Umfang der Erfindung zu verlassen.

**Bezugszeichenliste**

| | |
|---|---|
| 1 | LiDAR - Lichtempfangssensor |
| 2 | LiDAR - Lichtsignalgeber |
| 3 | Photodetector |
| 4 | Verstärker |
| 5 | Komperator |
| 6 | Rechner |
| 7 | Verzögerungsglied |
| 8 | LED-Treiber |
| 9 | LED |
| 10 | Optisches System |
| 11 | Halterung |
| 12 | Lichtsender |
| 13 | Weiterer Lichtsender |
| 14 | LiDAR - Lichtmesssystem |
| 15 | Untergrund |
| 16 | |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Simulationsvorrichtung für ein LiDAR - Lichtmesssystem mit einem LiDAR Lichtempfangssensor (1), **dadurch gekennzeichnet,**
**dass** in der Ebene des LiDAR - Lichtempfangssensor ein Lichtsender (12) vorhanden ist.

2. Simulationsvorrichtung nach Anspruch 1, **dadurch gekennzeichnet, dass** ein weiterer Lichtsender (13) neben dem Lichtsender (12) in der Ebene des LiDAR - Lichtempfangssensors (1) angeordnet ist.

3. Simulationsvorrichtung nach einem der vorigen Ansprüche, **dadurch gekennzeichnet, dass** der Lichtsender (12) und der weitere Lichtsender (13) Teil eines Glasfasers ist.

4. Simulationsvorrichtung nach einem der vorigen Ansprüche, **dadurch gekennzeichnet, dass** ein Rechner (6) vorhanden ist, welcher den LiDAR - Lichtempfangssensor (1) steuert.

5. Simulationsvorrichtung nach Anspruch 4, **dadurch gekennzeichnet, dass** der Rechner (6) den Lichtsender (12) und den weiteren Lichtsender (13) steuert.

6. Simulationsvorrichtung nach einem der Ansprüche 4 oder 5, **dadurch gekennzeichnet, dass** der Rechner (6) die Freischaltung des LiDAR - Lichtempfangssensors (1) und die Zeitspanne zur Abgabe eines Lichtsignals über den Lichtsender (12) und/oder den weiteren Lichtsender (13) überwacht und den Signaleingang des Lichtsignals von dem Lichtsender (12) oder dem weiteren Lichtsender (13) registriert.

7. Simulationsvorrichtung nach einem der vorigen Ansprüche, **dadurch gekennzeichnet, dass** ein LiDAR-Lichtsignal eines LiDAR-Lichtsignalgebers (2) durch einen Verstärker (4), einen Komperator (5), ein Verzögerungsglied (7) und einen LED- Treiber (8) eine LED (9) oder ein Laserdioden-Treiber eine Laserdiode in dem Lichtsender (12) und/oder weiterem Lichtsender (13) aktivierbar ist.

8. Simulationsvorrichtung nach einem der vorigen Ansprüche, **dadurch gekennzeichnet, dass** der Lichtsender (12) und/oder der weitere Lichtsender (13) statisch in einer Halterung in einem Umfang von bis zu 360°, zentrisch ausgerichtet zu dem LiDAR - Lichtempfangssensor (1), angebracht sind.

9. Verfahren zur Simulation einer Detektionsumgebung für einen LiDAR - Lichtempfangssensor (1) mit einem Lichtsender (12) und einem weiteren Lichtsender (13), der neben dem Lichtsender (12) in gleicher Ebene angebracht ist, **gekennzeichnet durch** folgende Schritte:
- der LiDAR - Lichtempfangssensor (1) wird aktiviert
- der Lichtsender (12) gibt ein Lichtsignal nach einer definierten Zeit ab
- der LiDAR - Lichtempfangssensor (1) registriert das Lichtsignal.

10. Verfahren nach Anspruch 9, **dadurch gekennzeichnet, dass** nach einer weiteren Aktivierung des LiDAR - Lichtempfangssensors (1) der weitere Lichtsender (13) ein weiteres Lichtsignal abgibt, wobei der LiDAR - Lichtempfangssensor (1) das weitere Lichtsignal registriert.

11. Verfahren nach einem der Ansprüche 9 der 10, **dadurch gekennzeichnet, dass** ein LiDAR-Lichtsignal eines LiDAR-Lichtsignalgebers (2) durch einen Photodetector (3), einen Verstärker (4), einen Komperator (5) und ein Verzögerungsglied (7) in einen LED- Treiber (8) oder einen Laserdioden-Treiber geleitet wird und der LED-Treiber (8) oder der Laserdioden-Treiber anschliessend eine LED (9) oder eine Laserdiode in einem optischen System (10) aktiviert.
